# EUROPEAN PATENT SPECIFICATION

(11) **EP 0 684 180 B1**
(45) Date of publication and mention of the grant of the patent: **01.07.1998**
(21) Application number: 95201227.6
(22) Date of filing: 11.05.1995
(51) Int. Cl.: B62H 1/04

(54) **Device for automatically operating a stand**
Vorrichtung zur automatischen Bedienung eines Ständers
Dispositif de fonctionnement automatique d'un support

(30) Priority: 25.05.1994 IT MI941060
(43) Date of publication of application: 29.11.1995
(73) Proprietor: PIAGGIO VEICOLI EUROPEI S.p.A., 56025 Pontedera (Pisa) (IT)
(72) Inventor: Cantini, Vittoriano, I-56012 Calcinaia, (Pisa) (IT)
(74) Representative: Appoloni, Romano

(56) References cited:
- EP-A- 0 357 881

## Description

This invention relates to a device for automatically operating a stand for a vehicle with two or more wheels according to the preambles of claims 1 and 2.

Mechanisms for the servo-assisted opeartion of a stand for two-wheeled vehicles of such kind are known, for example from US 4,651,845.

However they always require partial manual operation of the stand by the user, such operation not always being easy to carry out for certain types of vehicle. In addition precisely because their purpose is to partially aid the user in arranging the vehicle on the stand, these mechanisms are provided with complex systems for sensing the position of the stand relative to the frame or relative to the ground, which for certain ground conditions they are not always able to correctly achieve.

The fact of providing sensors and a control centre for processing the signals received from these sensors means that the instruments to be installed on the vehicle are overall delicate in terms of their mounting, maintenance and operability, their sophistication inevitably being reflected in high construction costs.

The object of the present invention is to provide a device for automatically operating a stand for a vehicle with at least two wheels which does not have the aforesaid drawbacks.

This is achieved according to the present invention by the features of the caracterising portions of claims 1 and 2. Advantageously said geared motor is electrically operated, and remotely controlled by suitable control means.

With said geared motor there are also associated elements for its automatic reversal or stoppage, plus other safety elements.

As will be more apparent from the ensuing description, the device of the present invention makes it possible to lift the vehicle and position it on the stand in a totally automatic, safe and reliable manner under any ground situation or inclination.

The present invention is described hereinafter by way of non-limiting example with reference to the accompanying drawings, in which:
Figure 1 is a side view of the entire operating device of the present invention;
Figure 2 is a side view of the operating unit for the cable used in the device of the present invention;
Figure 3 is a front view of a detail of Figure 1, and
Figure 4 is a section through the unit for transmitting movement from the geared motor to the winding pulley in the device of the present invention;
Figure 5 is an enlarged detail of part of one stand as in Figure 1 in a second embodiment, and
Figure 6 is a plant, partially sectioned, view of Figure 5.

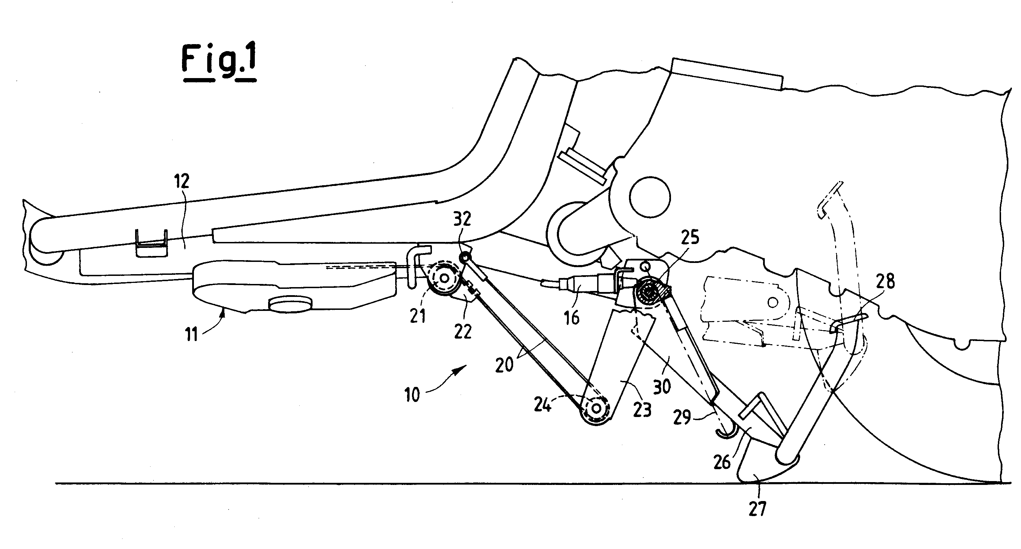

In Figure 1 the reference numeral 10 indicates overall a device for automatically operating a stand according to the present invention.

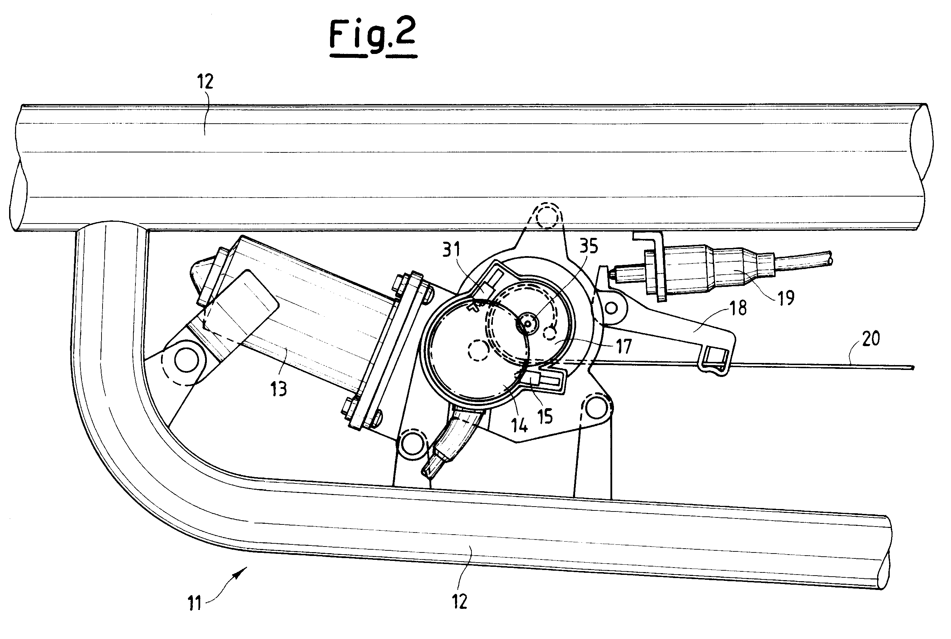

The reference numeral 12 indictaes the vehicle frame to which said device is applied. The reference numeral 11 indicates overall the operating unit for the cable 20, which encounters two bearing points in the pulleys 21 and 24. A geared motor (here not shown but indicated in Figure 2 by 13) forms part of the operating unit 11.

With the pulley 21, which is secured to but free to rotate on the frame 12, there is associated a scraper 22, the purpose of which is to remove foreign bodies from the surface of the cable 20 during its movement.

The pulley 24 is pivoted to the lower end of a lever 23 which at its other end is secured to the frame 12 and comprises a counteracting or pawl element 25 arranged to engage in a point (not shown) of the stand 26 when this rotates. Between the stand 26, or rather between a profiled plate 30 of said stand 26, and the frame 12 there is positioned a first elastic element 29, in this case a longitudinal spring. The stand 26 is hinged to the frame 12 such as to be able to freely rotate about the hinging axis, and is maintained in its raised rest position by the elastic element 29 via the plate 30.

The stand 26 further comprises two feet 27 for resting on the ground and two levers 28 for its foot operation.

In correspondence with the counteracting element 25 there is provided a "rearward" limit switch 16, which acts on the geared motor 13 and is operated when the vehicle has been lifted onto the stand.

Figure 2 shows in detail the operating unit 11 for the cable 20. It consists of an electrically operated geared motor 13, which by means of a transmission device (not shown) operates a pulley 17 comprising a helical groove (not shown here) able to house a winding of cable 20, and having a cover, not shown, of such configuration as to prevent the cable escaping from the pulley 17. Engaged with the pulley 17 and rotating in the opposite direction to it there is a pulley 14, with which there are combined a forward limit switch 15 and a rearward safety limit switch 31. A lever 18 acts on the cable 20 to maintain the cable tension under control during the entire operation of the stand 26. If the cable should become blocked or obstacles prevent its proper movement, a safety switch 19 is provided to disconnect the geared motor so that the moving parts do not undergo damage.

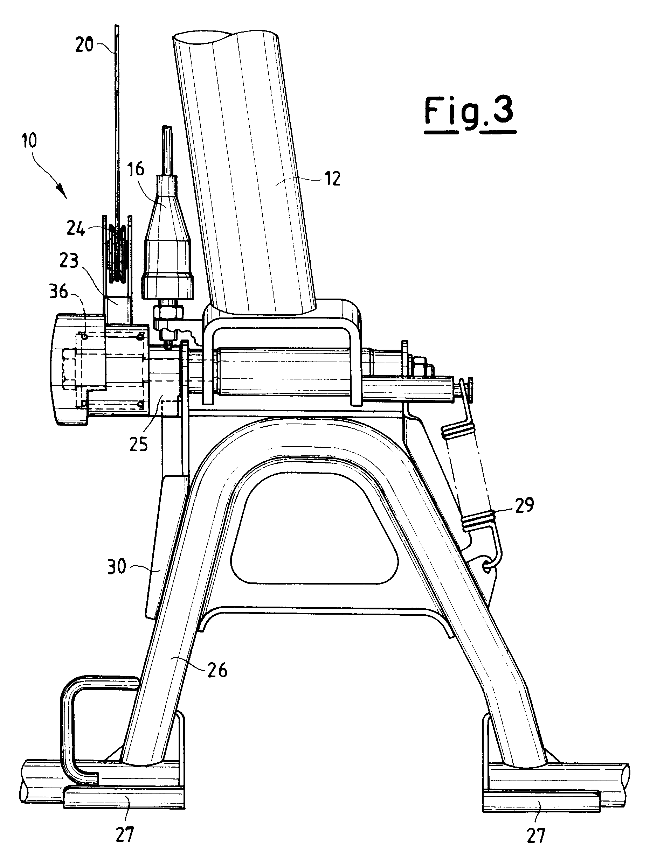

Figure 3 is a front view of the stand 26 with the means for effecting its movement. It will be noted that the spring 29 is positioned between the profiled plate 30 of the stand 26 and a pin rigid with the frame 12, the counteracting element 25 mounted on the lever 23 rotating with this latter. At its lower end, the lever 23 comprises the pulley 24 about which the cable 20 passes. The rearward limit switch 16 is operated by the counteracting element 25 when the lever 23 returns to its rest position when the vehicle has been lifted onto its stand.

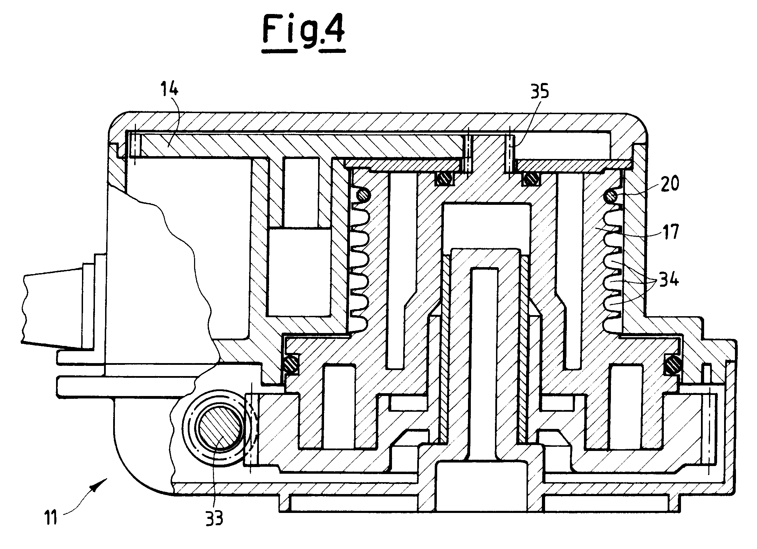

Figure 4 shows a section through the unit which transmits the movement of the geared motor shaft to the pulley 17. The reference numeral 33 indicates the geared motor shaft which by means of a pinion-gearwheel system (this system is not shown in the figure) transmits rotary movement to the pulley 17, which comprises a helical groove 34 in which the cable 20 winds. By means of mating gearwheels 35, the pulley 17 transmits movement to the pulley 14 geared down to such an extent that for the entire cable winding required for operating the stand, the pulley 14 does not undergo more than about three quarters of a revolution. The purpose of the pulley 14 is to operate, by virtue of its movement, the forward limit switch 15 and, in case of need, the rearward safety limit switch 31.

The device of the invention operates as follows. By means of controls (such as pushbuttons) placed in positions easily accessible to the vehicle user, and only with the engine turned off for safety reasons, the user starts the geared motor 13, which drives the pulley 17 so that it begins to wind the cable 20 and accomodate the winding within the helical groove 34 with which said pulley is provided. The pulley 17 rotates the pulley 14 with suitably geared-down movement. Before beginning to wind onto the pulley 17, the cable is cleaned of any dirt by the scraper 22. As the cable winds, it pulls the lever 23 towards the geared motor against the action of a helical spring 36 positioned at the end of the lever 23 pivoted to the frame. After an initial idle movement, the lever 23 via the counteracting element 25 rotatably moves the profiled plate 30 of the stand 26, so causing said stand 26 to rotate. Until the feet 27 touch the ground, the vehicle frame undergoes no movement relative to the ground. However from the moment in which the feet touch the ground, the point at which the stand rests on the ground undergoes no variation, and the rotary movement of the stand 26 induced by the lever 23 is effected while lifting the vehicle and shifting it rearwards.

During this movement, after passing the top dead centre, ie the vertical position of the stand, the actual weight of the vehicle and the action of the spring 29, which in the meantime has reversed its direction of operation, combine to complete the operation, until the stand engages against a stop element on the frame (not shown). At this point the pulley 14 is in a position such as to interfere with the forward limit switch 15, which hence reverses the rotational movement of the geared motor. The unwinding of the cable from the pulley 17 is also facilitated by the action of the helical spring 36 which tends to return the lever 23 to its initial rest position. When unwinding is complete, the lever 23 operates the limit switch 16, which halts the geared motor. If problems should arise with the result that the limit switch 16 is not operated, the pulley 14 on reaching its initial position operates the rearward safety limit switch 31, to hence halt the geared motor.

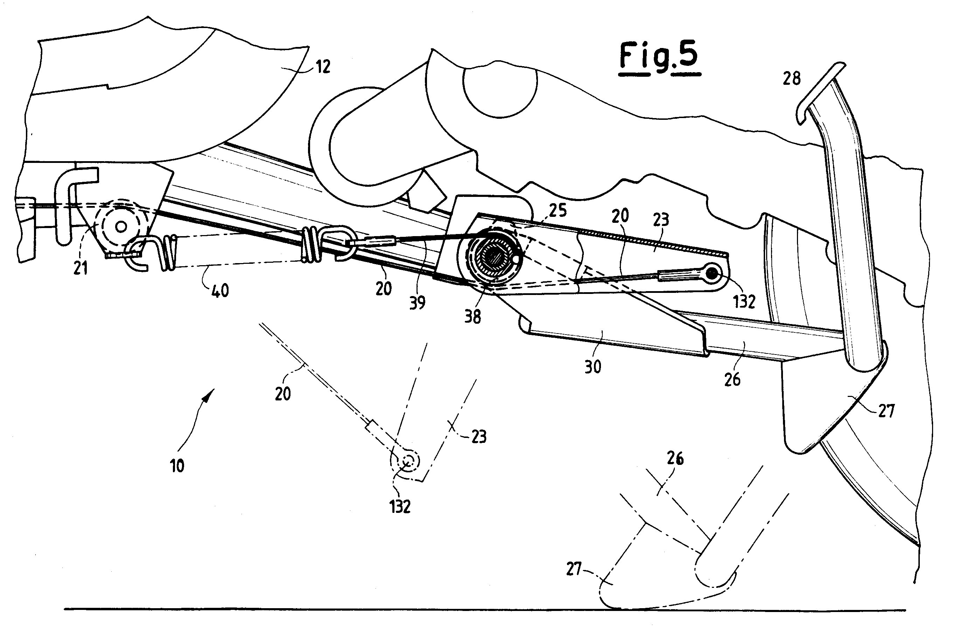

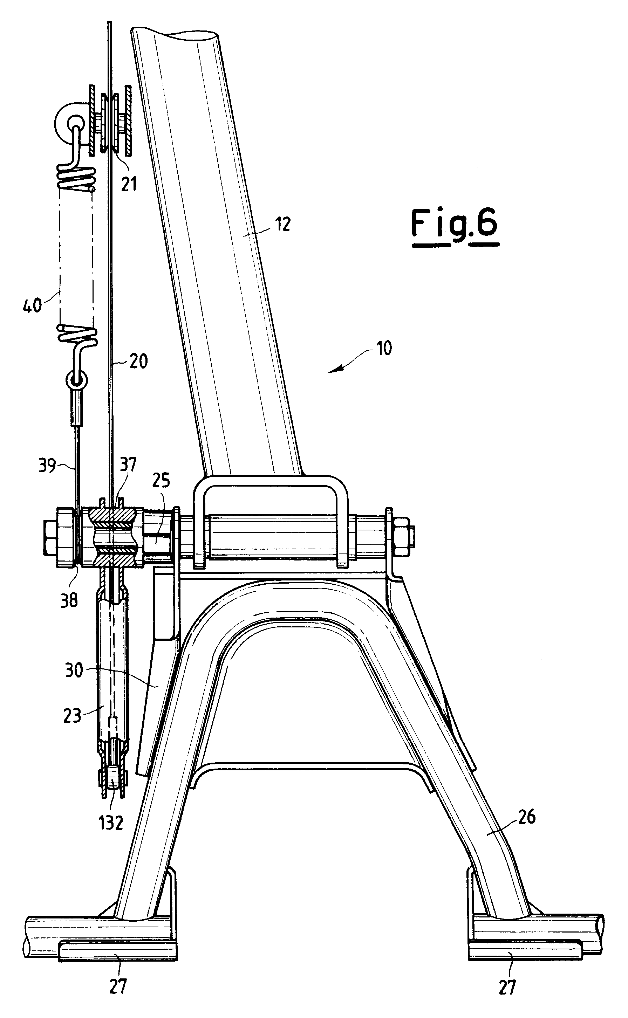

Figure 5 and 6 show a second embodiment of the device 10 according to the present invention whereby the same reference numerals are used to indicate the same elements as in the foregoing drawings. The cable 20 has one of its ends fixed to the winding pulley 17, which is operated by the geared motor 13, and the other end hooked to the lever 23 fixed in 132.

The pulley 21 is not provided with the scraper 22 because the cable portion which is wound on the pulley 17 is always clean for being in any condition protected by the cover of the operating group 11.

The return of the lever 23 is in this case operated by a spring 40 which is positioned between the frame 12 and the end of a second cable 39, which is to be wound on an addicted pulley or winding wheel 38, which is coaxial with the pivoting of the stand. A deviation pulley 37 for the first cable 20 is furthermore displaced coaxial to what above mentioned. The spring 40 warrants a constant tension for the cable.

## Claims

1. A device (10) for automatically operating a stand (26) of a vehicle with at least two wheels and a frame (12), in which said stand (26) is pivoted to the frame (12) of the relative vehicle such as to be able to rotate freely, the stand (26) being maintained in its raised rest position by a first elastic element (29) positioned between the stand (26) and the frame (12), wherein said device comprises a lever (23) rotatable in correspondence with the point at which the stand (26) is pivoted to the frame (12), said lever (23) being provided with a contrast element (25) such as to engage with a point of the stand in correspondence with a rotary movement of the lever (23), so that the same makes the stand (26) itself rotate, said lever (23) being rotatably operated by a cable (20) characterised by said lever (23) being provided with a first pulley (24), a second pulley (17) being operated by a geared motor (13) and winding an end portion of the cable (20), wherein said cable (20) is rigidly fixed at one end (32) to the frame (12) and at its other end to said second pulley (17), said first pulley (24) forming an intermediate bearing and deviation point for said cable portion.

2. A device (10) far automatically operating a stand (26) of a vehicle with at least two wheels and a frame (12), in which said stand (26) is pivoted to the frame (12) of the relative vehicle such as to be able to rotate freely, the stand (26) being maintained in its raised rest position by a first elastic element (29) positioned between the stand (26) and the frame (12), wherein said device comprises a lever (23) rotatable in correspondence with the point at which the stand (26) is pivoted to the frame (12), said lever (23) being provided with a contrast element (25) such as to engage with a paint of the stand in correspondence with a rotary movement of the lever (23), so that the same makes the stand (26) itself rotate and said lever (23) being rotatably operated by a cable (20) a first end of said cable (20) being rigidly fixed (in 132) to said lever (23) characterised by a first pulley (17) being operated by a geared motor (13) and winding a portion of the cable (20), which is ridigly fixed at its other end to said first pulley (17), wherein in correspondence of the point at which the stand (26) is pivoted to the frame (12), there is displaced a deviation pulley (37) for said cable (20), with said further pulley (37) being associated a winding wheel (38) for a further cable (39) connected to a first end of a further elastic element (40), which acts as a return element for said lever (23) to a raised position and is fixed at its second end to said frame (12).

3. An automatic operating device (10) as claimed in claim 1 or 2, characterised in that said geared motor (13) is electrically operated.

4. An automatic operating device (10) as claimed in claim 1 or 2, characterised in that two limit switches (15,16) are associated with said geared motor (13) for its forward and rearward operation respectively.

5. An automatic operating device (10) as claimed in one of the preceding claims, characterised in that safety switches (31,19) are provided far said geared motor (13).

6. An automatic operating device (10) as claimed in one of the preceding claims, characterised in that said second pulley (17) operated by said geared motor (13) comprises a helical groove (34) for housing a winding of said cable portion (20).

7. An automatic operating device (10) as claimed in claim 1 or 2, characterised in that a second elastic element (36) is associated with said lever (23).

8. An automatic operating device (10) as claimed in claim 7, characterised in that said second elastic element (36) is a helical spring.

9. An automatic operating device (10) as claimed in claim 1, characterised in that said first elastic element (29) is a longitudinal spring.

10. An automatic operating device (10) as claimed in one of the preceding claims, characterised by comprising a third pulley (21) secured to the frame and arranged to define a further bearing and deviation point for said cable portion (20).

## Patentansprüche

1. Vorrichtung (10) zum automatischen Betätigen eines Ständers (26) eines Fahrzeugs mit zumindest zwei Rädern und einem Rahmen (12), bei welcher der Ständer (26) zu dem Rahmen (12) des betreffenden Fahrzeugs derart geschwenkt wird, daß er in der Lage ist, sich frei zu drehen, wobei der Ständer (26) durch ein erstes elastisches Element (29) in seiner erhöhten Ruheposition gehalten wird, das zwischen dem Ständer (26) und dem Rahmen (12) positioniert ist, wobei die Vorrichtung einen Hebel (23) aufweist, der entsprechend zu dem Punkt drehbar ist, an dem der Ständer (26) zu dem Rahmen (12) geschwenkt wird, wobei der Hebel (23) mit einem Kontrastelement (25) derart versehen ist, daß er mit einem Punkt des Ständers entsprechend einer Drehbewegung des Hebels (23) in Eingriff tritt, so daß diese bewirkt, daß sich der Ständer (26) selbst dreht, wobei der Hebel (23) durch ein Seil (20) drehbar ist, dadurch gekennzeichnet, daß der Hebel (23) mit einer ersten Rolle (24) versehen ist, wobei eine zweite Rolle (17) durch einen Getriebemotor (13) betrieben wird und einen Endabschnitt des Seils (20) aufwickelt, wobei das Seil (20) an einem Ende (32) starr an dem Rahmen (12) und an seinem anderen Ende an der zweiten Rolle (17) befestigt ist, wobei die erste Rolle (24) einen Zwischenlagerungs- und Ablenkpunkt für den Seilabschnitt bildet.

2. Vorrichtung (10) zum automatischen Betätigen eines Ständers (26) eines Fahrzeugs mit zumindest zwei Rädern und einem Rahmen (12), bei welcher der Ständer (26) zu dem Rahmen (12) des betreffenden Fahrzeuges derart geschwenkt wird, daß er in der Lage ist, sich frei zu drehen, wobei der Ständer (26) durch ein erstes elastisches Element (29) in seiner angehobenen Ruheposition gehalten wird, das zwischen dem Ständer (26) und dem Rahmen (12) positioniert ist, wobei die Vorrichtung einen Hebel (23) aufweist, der entsprechend zu dem Punkt drehbar ist, an dem der Ständer (26) zu dem Rahmen (12) geschwenkt wird, wobei der Hebel (23) mit einem Kontrastelement (25) derart versehen ist, daß er mit einem Punkt des Ständers entsprechend einer Drehbewegung des Hebels (23) in Eingriff tritt, so daß diese bewirkt, daß sich der Ständer (26) selbst dreht, wobei der Hebel (23) durch ein Seil (20) drehbar ist, wobei ein erstes Ende des Seiles (20) starr (bei 132) an dem Hebel (23) befestigt ist, gekennzeichnet durch eine erste Rolle (17), die durch einen Getriebemotor (13) betrieben wird und einen Abschnitt des Seiles (20) aufwickelt, das starr an seinem anderen Ende an der ersten Rolle (17) befestigt ist, wobei entsprechend zu dem Punkt, an dem der Ständer (26) zu dem Rahmen (12) geschwenkt wird, eine Ablenkrolle (37) für das Seil (20) verschoben wird, wobei die weitere Rolle (37) in Verbindung mit einem Aufwickelrad (38) für ein weiteres Seil (39) steht, das mit einem ersten Ende eines weiteren elastischen Elementes (40) verbunden ist, das als ein Rückhohlelement für den Hebel (23) zu einer angehobenen Position wirkt und an seinem zweiten Ende an dem Rahmen (12) befestigt ist.

3. Vorrichtung (10) zum automatischen Betätigen nach Anspruch 1 oder 2, dadurch gekennzeichnet, daß der Getriebemotor (13) elektrisch betrieben ist.

4. Vorrichtung (10) zum automatischen Betätigen nach Anspruch 1 oder 2, dadurch gekennzeichnet, daß dem Getriebemotor (13) für dessen Vorwärts- bzw. Rückwärtsbetrieb zwei Begrenzungsschalter (15, 16) zugeordnet sind.

5. Vorrichtung (10) zum automatischen Betätigen nach einem der vorhergehenden Ansprüche, dadurch gekennzeichnet, daß Sicherheitsschalter (31, 19) für den Getriebemotor (13) vorgesehen sind.

6. Vorrichtung (10) zum automatischen Betätigen nach einem der vorhergehenden Ansprüche, dadurch gekennzeichnet, daß die zweite Rolle (17), die durch den Getriebemotor (13) betrieben wird, eine schraubenförmige Nut (34) umfaßt, um eine Wicklung des Seilabschnitts (20) unterzubringen.

7. Vorrichtung (10) zum automatischen Betätigen nach Anspruch 1 oder 2, dadurch gekennzeichnet, daß dem Hebel (23) ein zweites elastisches Element (36) zugeordnet ist.

8. Vorrichtung (10) zum automatischen Betätigen nach Anspruch 7, dadurch gekennzeichnet, daß das zweite elastische Element (36) eine schraubenförmige Feder ist.

9. Vorrichtung (10) zum automatischen Betätigen nach Anspruch 1, dadurch gekennzeichnet, daß das erste elastische Element (29) eine Längsfeder ist.

10. Vorrichtung (10) zum automatischen Betätigen nach einem der vorhergehenden Ansprüche, dadurch gekennzeichnet, daß eine dritte Rolle (21) vorgesehen ist, die an dem Rahmen befestigt und derart angeordnet ist, um einen weiteren Lager- und Ablenkpunkt für den Seilabschnitt (20) zu definieren.

## Revendications

1. Dispositif (10) pour actionner automatiquement une béquille (26) d'un véhicule ayant au moins deux roues et un cadre (12) dans lequel ladite béquille (26) pivote par rapport au cadre (12) du véhicule concerné, de manière à pouvoir tourner librement, la béquille (26) étant maintenue dans sa position relevée de repos par un premier élément élastique (29) positionné entre la béquille (26) et le cadre (12), dans lequel ledit dispositif comprend un lever (23) pouvant tourner en correspondance avec le point sur lequel la béquille (26) pivote par rapport au cadre (12), ledit levier (23) étant muni d'un élément de contre-réaction (25) de manière à venir en prise avec un point de la béquille en correspondance avec un mouvement rotatif du lever (23), afin que ce dernier face pivoter la béquille (26) elle-même, ledit levier (23) étant actionné à rotation par un câble (20) caractérisé en ce que ledit levier (23) est muni d'une première poulie (24), une seconde poulie (17) étant actionnée par un moto-réducteur (13) et enroulant une portion d'extrémité du câble (20), ledit câble (20) étant fixé rigidement par une extrémité (32) au cadre (12) et par son autre extrémité à ladite seconde poulie (17), ladite première poule (24) formant un support intermédiaire et un point de déviation pour ladite portion de câble.

2. Dispositif (10) pour actionner automatiquement une béquille (26) d'un véhicule ayant au moins deux roues et un cadre (12), dans lequel ladite béquille (26) pivote par rapport au cadre (12) du véhicule concerné, de manière à pouvoir tourner librement, la béquille (26) étant maintenue dans sa position relevée de repos par un premier élément élastique (29) positionné entre la béquille (26) et le cadre (12), dans lequel, ledit dispositif comprend un lever (23) pouvant tourner en correspondance avec le point sur lequel la béquille (26) pivote par rapport au cadre (12), ledit lever (23) étant muni d'un élément de contre-réaction (25) de manière à venir en prise avec un point de la béquille en correspondance avec un mouvement de rotation du levier (23) afin que ce dernier fasse tourner la béquille (26) ellemême, et ledit lever (23) étant actionné à rotation par un câble (20) une première extrémité dudit câble (20) étant rigidement fixée (en 132) audit lever (23), caractérisé en ce que une première poulie (17) est actionnée par un moto-réducteur (13) et elle enroule une portion du câble (20) qui est fixée rigidement par son autre extrémité à ladite première poulie (17), dans lequel, en correspondance avec le point sur lequel pivote la béquille (26) par rapport au cadre (12), est déplacée une poulie de déviation (37) pour ledit câble (20), ladite poulie supplémentaire (37) étant associée à une roue d'enroulement (38) pour un autre câble (39) connecté à une première extrémité d'un autre élément élastique (40), qui agit en tant qu'élément de rappel pour ledit lever (23) vers une position relevée et qui est fixé par sa seconde extrémité audit cadre (12).

3. Dispositif d'actionnement automatique (10) tel que précisé dans la revendication 1 ou 2 caractérisé en ce que ledit moto-réducteur (13) est actionné électriquement.

4. Dispositif d'actionnement automatique (10) selon la revendication 1 ou 2 caractérisé en ce que deux commutateurs de limite (15, 16) sont associés audit moto-réducteur (13) respectivement pour son fonctionnement en avant et en arrière.

5. Dispositif d'actionnement automatique (10) selon l'une quelconque des revendications précédentes caractérisé en ce que des commutateurs de sécurité (31, 19) sont prévus pour ledit moto-réducteur (13).

6. Dispositif d'actionnement automatique (10) selon l'une des revendications précédentes caractérisé en ce que ladite seconde poulie (17) actionnée par ledit moto-réducteur (13) comprend une rainure hélicoïdale (34) destinée à loger un enroulement de ladite portion de câble (20).

7. Dispositif d'actionnement automatique (10) selon la revendication 1 ou 2 caractérisé en ce qu'un second élément élastique (36) est associé audit levier (23).

8. Dispositif d'actionnement automatique (10) selon la revendication 7 caractérisé en ce que ledit second élément élastique (36) est un ressort hélicoidal.

9. Dispositif d'actionnement automatique (10) selon la revendication 1 caractérisé en ce que ledit premier élément élastique (29) est un ressort longitudinal.

10. Dispositif d'actionnement automatique (10) selon l'une des revendications précédentes caractérisé en ce qu'il comprend une troisième poulie (21) fixée au cadre et conçue de manière à définir un autre support et un autre point de déviation pour ladite portion de câble (20).
